# EUROPEAN PATENT APPLICATION

(11) **EP 3 454 348 A1**
(43) Date of publication of application: **13.03.2019**
(21) Application number: 17190461.8
(22) Date of filing: 11.09.2017
(51) Int. Cl.: H01F 7/02, H02K 21/00, H01F 41/00, H01F 41/02, H02K 15/03, H01F 13/00

(54) **METHOD FOR MANUFACTURING OF MAGNET ASSEMBLY FOR AN ELECTRICAL MACHINE AND A MAGNET ASSEMBLY**

(71) Applicant: JLMAG Rare-earth Co. Europe B.V., 5482 TL Schijndel (NL)
(72) Inventor: Greijmans, Johannes Petrus Maria, 5712 GH Someren-Heide (NL)
(74) Representative: Nederlandsch Octrooibureau

(57) **Abstract**

The invention relates to a method for manufacturing a magnet assembly for an electrical machine comprising the steps of: providing a plurality of magnet segments of a magnetisable material and a carrier; aligning and assembling the plurality of the magnet segments side by side on the carrier; and cohering the magnet segments on the carrier into a subassembly.

## Description

### Field of the invention

The present invention relates to a method for manufacturing of a magnet assembly for an electrical machine and a magnet assembly.

### Background art

The magnet assembly can be applied in electrical machines, such as electric motors and generators. For example, in rotors of permanent magnet generators for power stations or windmills. Such a method is known from US 2014/005499.

In the known method a stack of magnets comprises a number of packed bar-shaped magnet segments. The magnet segments are stacked side by side. Isolation is provided between the adjacent axial faces of the magnet segments to reduce eddy current effects in the magnetized material. The insulation between the adjacent faces may include polymer sheets or a substantial non-electrical conducting coating. Alternatively the insulation may comprise air pockets between the adjacent faces of the magnet segments.

In the known method the magnets segments are formed by making a long magnet and cutting the long magnet in shorter magnet segments, the formed magnet segments are assembled in a stack. After the magnet segments are stacked, the magnet stack is subjected to a cohering process, for example including overmoulding the magnet segments with an epoxy or other potting material. The magnet stack can be placed in a slot in the rotor of an electric machine. In several applications for example for power stations and windmill generators large dimensions of the rotors and also the magnet stacks are required. Manufacturing of these stacks of magnet segments can be cumbersome and dangerous.

### Summary of the invention

The present invention seeks to provide a method for manufacturing of magnet assemblies that increases productivity and improves safety during manufacturing.

According to a first aspect of the present invention, a method as defined above is provided, comprising the steps of providing a plurality of magnet segments of a magnetisable material and a carrier, aligning and assembling the plurality of the magnet segments side-by-side on the carrier. The magnet segments are aligned and assembled side by side on the carrier having the desired shape and size and can be cohered together to obtain the subassembly.

According to the invention when the magnet segments are not magnetized yet they can be assembled on the carrier in the desired arrangement without any danger to production workers, whereas according to the known method this assembling could be very dangerous because of the large forces induces by the magnet segments when brought together. Further advantages are precise alignment and freedom of design.

According to an embodiment of the method, the method further comprises, before aligning and the assembling, providing spacers on a first face of at least one of the plurality of magnet segments. The space obtained between the spacers provide electrical isolation between the adjacent magnet segments to reduce eddy current effects. The spacers can be for example, glass beads, or glass fibres, fish line and the like. The height or thickness of the spacers is selected as a value in the range from 20 to 500 micron.

In an embodiment the method comprises a further step of, before aligning and the assembling step, providing spacers on a further face of the magnet segment adjacent the first face of the magnet segment, for example on the face that is faced to the carrier, in order to obtain a defined distance between the carrier and the magnet segments. The spacers can be provided on the face of the magnet segment facing the carrier. For example, to define the distance between the carrier and the magnet segments.

In an embodiment the height or thickness of the spacers is in the range between 20 and 500 micron.

In a further embodiment the step of providing spacers comprises providing a curable polymer on at least one of the faces of the magnet segments. The spacers can be formed by placing defined dots of a curable polymer in a defined configuration by a dispensing machine. The size of the dots is sufficient to obtain after curing the selected height. Furthermore, this steps enables different sizes of the spacers. In this way a distance between adjacent magnet segments can be precisely obtained and a distance between the carrier and the face of the magnet directed to the carrier can be precisely defined, wherein the distance between the adjacent magnet segments can be different from the distance between the carrier and the face of the magnet directed to the carrier.

In an embodiment the curing polymer is a radiation curable polymer. Applying a radiation curable polymer provides accurate shape and dimension of the dots, by directly after providing the dots on the carriers, providing radiation to the dots. The radiation can be in the UV or visible range.

In a different embodiment of the method, the step of cohering comprises overmoulding the subassembly. By placing the subassembly i.e. the carrier and the magnet segments in a mould having the desired shape and size and the subassembly can be cohered together by performing further steps of filling the mould with a resin and curing the resin.

In a further embodiment the magnetisable material comprises Neodymium (Nd), Iron (Fe), Boron (B) or Samarium (Sm) and Cobalt (Co).

In a still further embodiment the magnetisable material is anisotropic and having a first orientation direction.

In a still further embodiment the method further comprises providing a magnetic field configured to magnetize a magnet segment of the plurality of the magnet segments, wherein the magnetic field has a first direction parallel or anti-parallel to the orientation direction. By selecting the first direction being parallel or anti-parallel to the orientation direction of the magnetic material a subassembly with desired direction of north/south direction of one or more or all magnet segments can be obtained.

In a further embodiment the method further comprises: providing a second magnetic field configured to magnetize a second magnet segment adjacent to the first magnet segment in a direction opposite to the first direction wherein the second magnetic field has a second direction opposite to the first direction. In this way adjacent magnet segments has can have alternating magnetization direction.

According to a second aspect of the invention an electrical machine is provided comprising a magnet assembly that is manufactured according to any of the claims 1 - 13.

### Short description of drawings

The present invention will be discussed in more detail below, with reference to the attached drawings, in which
Fig. 1 shows diagrammatically a rotor for an electrical machine for holding the magnet assemblies;
Fig. 2 shows diagrammatically a carrier and attached magnet segments;
Fig. 3 shows a profile of the magnet segments attached to the carrier;
Fig. 4 shows a magnet segment provided with dots;
Fig. 5 shows a mould, together with the carrier and the magnet segments; and
Fig. 6 shows a flow diagram of the method for manufacturing of the magnet assemblies.

In the figures like reference numbers indicate like parts.

### Description of embodiments

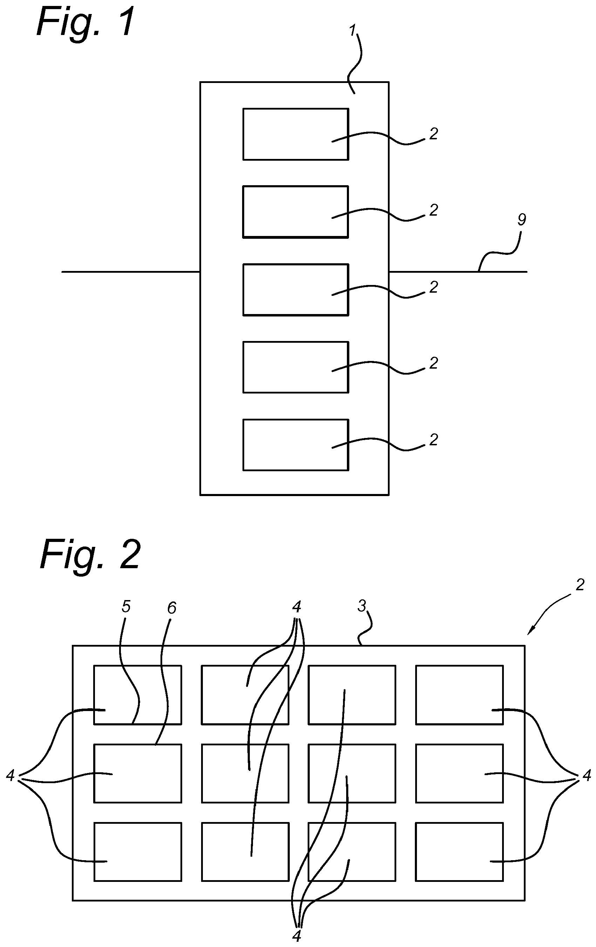

The invention is described with reference to figs 1 to 6.
The magnet assemblies are applied in an electrical machine. The electrical machine can be a permanent magnet generator in a power station or permanent magnet electric motor. For example in wind mills or hydro power stations.

In another application the electrical machine can be a linear electric motor. In the linear electric motor a stator and a rotor are "unrolled" so that instead of producing a torque (rotation) it produces a linear force along its length.

Fig. 1 shows schematically a view of an embodiment of a rotor 1 for an electrical machine comprising magnet assemblies 2 according to the invention. In this embodiment the magnet assemblies are attached to the inner circumference or outer circumference of the rotor. The magnet assemblies 2 can have a rectangular shape. The rotor can be rotatable around a rotation axis 9.

In the method magnet segments of a magnetisable material are provided. The magnet segments of magnetisable material can be obtained by dividing a rod in multiple bar shaped magnet segments or disk-shaped magnet segments.

The magnet segments are not yet magnetized so that the magnet segments can be handled safely in a manufacturing environment. The magnetisable material of the magnet segments may comprise an alloy of Neodymium (Nd), Iron (Fe), Boron (B) or an alloy of Samarium (Sm) and Cobalt (Co), these compositions are well known to the person skilled in the art. Many other rare-earth magnetisable material well-known to the person skilled in the art can be applied.

In a next step the magnet segments 4 are attached to a carrier 3. The carrier or substrate can be, for example a steel plate. The magnets segments 4 can be attached to the carrier 3 by an adhesive or resin or additional screws.

Fig. 2 shows an assembly of the carrier 3 and attached magnet segments 4. Fig. 2 shows an arrangement wherein a number of the magnet segments 3 are arranged side by side, for example in a stack or an array. In the stack a first face of a first magnet segment is coupled to a second face of a second magnet segment adjacent to the first magnet segment, the second face is opposite to the first face.

In an embodiment the distance between the adjacent magnet segments is defined by providing spacers at the first face of the magnet segments. Conventionally, the spacers can be glass beads, glass fibres or nylon line. The height or thickness of the spacers can be in the range between 20 and 500 µm. The spacers between adjacent magnet segments can have a thickness of 300 µm. The spacers can also be provided on a face of the magnet segment opposite the carrier for defining a predetermined distance between the magnet segments and the carrier. The distance between the magnet segments and the carrier is for example 200 µm. The step of providing the spacers on the magnet segment can be difficult, in particular when spacers of different dimensions have to be provided on respective faces of the magnet segments, spacers tend to stick on other faces than the desired face of the magnet segment.

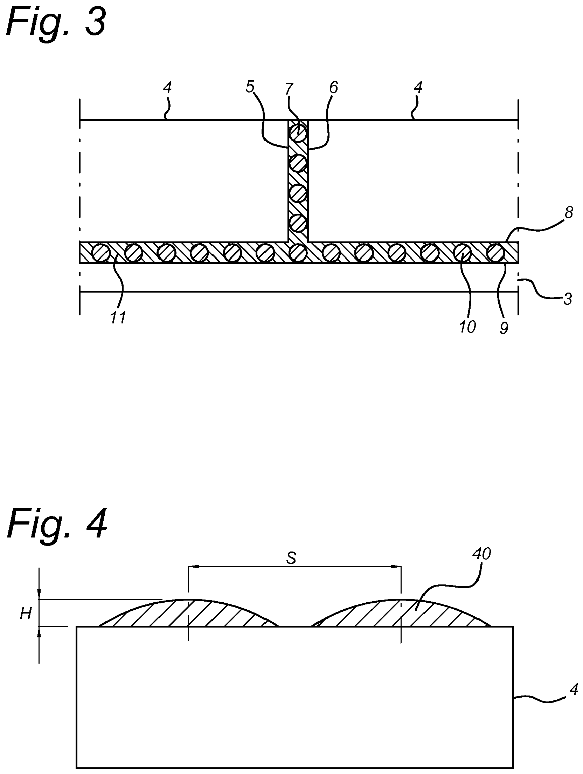

Fig. 3 shows a profile of the magnet segments 4 attached to the carrier 3. Between the opposite faces 5, 6 of the magnet segments 4 spacers 7 of a first height or thickness are provided. Furthermore, between the further face 8 of the magnet segment 4 and the face 9 of the carrier 3 opposite to the further face 8 spacers 10 of a second height or thickness are provided. Furthermore, an adhesive 11 is present in the space between the adjacent magnet segments 4 and between the magnet segments 4 and the carrier 3. In an embodiment the spacers can also be positioned at an outer side of the magnet segments to define a distance between a mould and the magnet segments.

In an embodiment the magnet segments 4 are attached to the carrier 3 by the resin.

In an embodiment the steps of providing spacers comprises providing dots of a curable polymer on a face of the magnet segments by a dispensing machine. The dispensing machine is arranged to provide the dots having predetermined dimensions in a first configuration on a desired face of the magnet segments. In an embodiment the curable polymer can be for example a radiation curable polymer, wherein directly after dispensing the dots, a radiation source is activated to initiate polymerisation of the radiation curing polymer. The radiation curable polymer can be an UV curable polymer. The radiation source can be a light source for radiating light having a wavelength in the UV range. An advantage of the dispensing machine is that the dots of the curable polymer can be dispensed at a high rate and high precision in a predefined configuration which shortens manufacturing time, improves quality and reproducibility and provides a high degree of freedom in design. A further advantage this way of providing the spacers is that the dimensions and the configurations of the dots provided on a first face of the magnet segment can be different from the dimensions and the configuration of the dots of an other face of the magnet segment.

Fig. 4 shows a view of a profile of a magnet segment 4 provided with dots 40. The height H of the dots of the curable polymer can be in the range between 20 and 500 µm. The distance S between the dots of the curable polymer can be for example 300 µm.

In a next step of the method the carrier and the attached magnet segments 4 are cohered together for example by overmoulding the carrier and the attached magnet segments. Thereto, the carrier 3 and the magnet segments 4 are placed in a mould 50 for example of stainless steel. In a next step a curable resin is forced into the mould and the resin is cured. After curing the mould is removed from the assembly and can be reused. In an embodiment reinforcement elements can be added to the resin. For example reinforcement fibres, glass fibres or the like. The processes that can be used for overmoulding can be a combination of Resin Transfer Moulding, Resin Injection moulding or Vacuum Assisted Resin Transfer Moulding, or Vacuum Assisted Resin Injection Moulding. The overmoulding of the magnet assembly can be completely or partly.

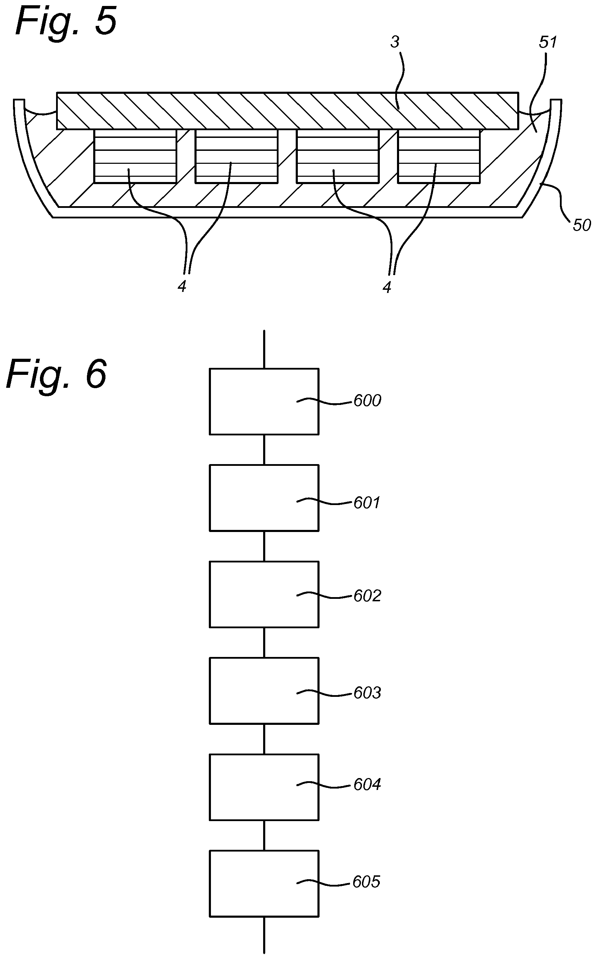

Fig. 5 shows a mould 50 wherein the carrier 3 and the magnet segments 4 are positioned. The mould is positioned upside down so that it can be filled with a resin 51. After curing the magnet assembly or subassembly is released from the mould 50.

An advantage of using a mould of stainless steel is that can it can provide a high precision. Furthermore, this kind of mould is reusable and because its reusability reduces costs of manufacturing the magnet assembly.

In a further step the magnet assembly can be magnetized. When the magnetisable material is anisotropic and has a first orientation direction providing a first magnetic field with a desired strength and direction to magnetize the magnet segments in a first direction parallel or anti-parallel to the orientation direction.

In an embodiment a second magnetic field can be applied to magnetize a magnet segment adjacent to the first magnet segment, in a direction opposite to the first direction. The second magnetic field can have a second direction opposite to the first direction. The magnetic first and second magnetic field can be applied at the instant. In this way magnet segments that are positioned side-by-side in the assembly can have alternating directions of the magnetization.

In general the magnetization of the magnet assemblies takes place just before placing the magnet assembly in the rotor. All the magnet segments of the assembly can be magnetized in the same or different or opposite directions.

Fig. 6 shows a flow diagram of the method. In a first step 600 spacers are provided on one or more faces of the magnet segments. In embodiments these step can be omitted.

In a further step 601 the magnet segments are aligned and assembled on the carrier;

In a still further step the magnet segments are cohered to the carrier into a subassembly. The cohering step comprises substeps of
A step 602 of placing the carrier and the magnet segments in a mould;
Filling 603 the mould with a resin;
Curing 604 the resin and releasing magnet assembly from the mould;
In some embodiments a further step 605 comprises providing a magnetic field having a sufficient strength and direction to magnetize the magnet segments of the subassembly in a desired direction. For example, the magnetic field can be configured to magnetize one or more magnet segments. The magnetic field can have a first direction parallel or anti-parallel to the orientation direction of the magnetisable material.

The present invention has been described above with reference to a number of exemplary embodiments as shown in the drawings. Modifications and alternative implementations of some parts or elements are possible, and are included in the scope of protection as defined in the appended claims.

## Claims

1. A method for manufacturing a magnet assembly for an electrical machine comprising the steps of:
providing a plurality of magnet segments of a magnetisable material and a carrier;
aligning and assembling the plurality of the magnet segments side by side on the carrier; and
cohering the magnet segments on the carrier into a subassembly.

2. The method according to claim 1, further comprises, before aligning and the assembling step, providing spacers on a first face of at least one of the plurality of magnet segments.

3. The method according to claim 2, wherein the height or thickness of the spacers is in the range between 20 and 500 micron.

4. The method according to claim 2 or 3, wherein the method comprises a further step of providing spacers at a further face of the magnet segment adjacent the first face of the magnet segment.

5. The method according to claim 4, wherein the further face is faced to the carrier.

6. The method according to any one claims 2- 5 wherein the step of providing spacers comprises providing a curable polymer on at least one of the faces of the magnet segments.

7. The method according to claim 6, wherein the curable polymer is a radiation curable polymer.

8. The method according to any of the claims 1-7, wherein the step of cohering comprises overmoulding the subassembly.

9. The method according to claim 8, wherein the step of overmoulding comprises placing the subassembly in a mould; filling the mould with a resin and curing the resin;

10. The method according to any of the preceding claims, wherein the magnetisable material comprises Neodymium (Nd), Iron (Fe), Boron (B) or Samarium (Sm) and Cobalt (Co).

11. The method according to any of the claims 1 - 10, wherein the magnetisable material is anisotropic and having a first orientation direction.

12. The method according to claim 11, further comprising providing a first magnetic field configured to magnetize at least one of the plurality of magnet segment, wherein the first magnetic field has in a first direction parallel or anti-parallel to the orientation direction.

13. The method according to claim 12, further comprising providing a second magnetic field configured to magnetize a second magnet segment adjacent to the first magnet segment in a direction opposite to the first direction wherein the second magnetic field has a second direction opposite to the first direction.

14. An electrical machine comprising a magnet assembly manufactured according to any one of the claims 1 - 13.
